# EUROPEAN PATENT APPLICATION

(11) **EP 4 391 645 A1**
(43) Date of publication of application: **26.06.2024**
(21) Application number: 22857742.5
(22) Date of filing: 15.08.2022
(51) Int. Cl.: H04W 36/00, H04W 36/30, H04W 36/36

(54) **CELL RESELECTION METHOD AND APPARATUS, TERMINAL, AND READABLE STORAGE MEDIUM**

(30) Priority: 18.08.2021 CN 202110949431
(71) Applicant: Vivo Mobile Communication Co., Ltd., Dongguan, Guangdong 523863 (CN)
(72) Inventor: HUANG, Li, Dongguan, Guangdong 523863 (CN)
(74) Representative: Lavoix
(86) International application number: PCT/CN2022/112491
(87) International publication number: WO 2023/020430

(57) **Abstract**

This application belongs to the field of communication technologies, and discloses a cell reselection method and apparatus, a terminal, and a readable storage medium. The cell reselection method includes: obtaining at least one candidate cell when a serving cell of a first subscriber identification module SIM card in a terminal satisfies a cell reselection condition; and selecting one target cell from the at least one candidate cell to perform a cell reselection procedure of the first SIM card, where the target cell and the serving cell belong to a same tracking area.

## Description

### CROSS-REFERENCE TO RELATED APPLICATIONS

This application claims priority to Chinese Patent Application No. 202110949431.2, filed on August 18, 2021 and entitled "CELL RESELECTION METHOD AND APPARATUS, TERMINAL, AND READABLE STORAGE MEDIUM", which is incorporated herein by reference in its entirety.

### TECHNICAL FIELD

This application belongs to the field of communication technologies, and in particular, to a cell reselection method and apparatus, a terminal, and a readable storage medium.

### BACKGROUND

Usually, more than two subscriber identification module (Subscriber Identification Module, SIM) cards can be inserted into a multi-SIM single-pass mobile phone, and the plurality of SIM cards can all be kept registered.

In a conventional technology, when the mobile phone is configured with only one set of radio frequency resources, a quantity of antennas of the mobile phone cannot satisfy a requirement of all the SIM cards for transmitting data simultaneously. In other words, when one of the SIM cards occupies the radio frequency resources, other SIM cards cannot transmit or receive data. A dual-SIM single-pass mobile phone is used as an example. During a data service based on a wireless communication network connection established by an application on the mobile phone by using a primary card, after a secondary card completes a cell reselection procedure and resides a new cell, the secondary card needs to exit an idle mode and enter a connected mode if the secondary card requires a location update, and radio frequency resource preemption occurs, causing lags during the data service of the primary card and affecting usage of the data service of the primary card.

### SUMMARY

Embodiments of this application are intended to provide a cell reselection method and apparatus, a terminal, and a readable storage medium, to solve a problem in a conventional technology that a SIM card preempts radio frequency resources.

According to a first aspect, an embodiment of this application provides a cell reselection method. The method includes:
obtaining at least one candidate cell when a serving cell of a first subscriber identification module SIM card in a terminal satisfies a cell reselection condition; and
selecting one target cell from the at least one candidate cell to perform a cell reselection procedure of the first SIM card, where
the target cell and the serving cell belong to a same tracking area.

According to a second aspect, an embodiment of this application provides a cell reselection apparatus, including:
an obtaining module, configured to obtain at least one candidate cell when a serving cell of a first subscriber identification module SIM card in a terminal satisfies a cell reselection condition; and
a cell reselection module, configured to select one target cell from the at least one candidate cell to perform a cell reselection procedure of the first SIM card, where
the target cell and the serving cell belong to a same tracking area.

According to a third aspect, an embodiment of this application provides a terminal. The terminal includes a processor, a memory, and a processor-executable program or an instruction stored in the memory, where when the program or the instruction is executed by the processor, steps of the method according to the first aspect are implemented.

According to a fourth aspect, an embodiment of this application provides a readable storage medium. The readable storage medium stores a program or an instruction, and when the program or the instruction is executed by a processor, steps of the method according to the first aspect are implemented.

According to a fifth aspect, the embodiment of this application provides a chip. The chip includes a processor and a communication interface, the communication interface is coupled to the processor, and the processor is configured to run a program or an instruction, to implement steps of the method according to the first aspect.

According to a sixth aspect, an embodiment of this application provides a computer program product, including a computer program. When the computer program is executed by a processor, steps of the method according to the first aspect are implemented.

In embodiments of this application, when the serving cell of the first SIM card in the terminal satisfies the cell reselection condition and there is the at least one candidate cell, a candidate cell that belongs to the same tracking area as the serving cell is selected from the candidate cell to be the target cell. As the target cell and the serving cell belong to the same tracking area, after the first SIM card reselects and resides the target cell, a location update procedure is not triggered, to prevent the first SIM card from exiting an idle mode, entering a connected mode, and preempting radio frequency resources of the terminal.

### BRIEF DESCRIPTION OF DRAWINGS

FIG 1 is a schematic diagram of a structure of a wireless communication system to which an embodiment of this application is applicable;
FIG 2 is a first flowchart of a cell reselection method according to an embodiment of this application;
FIG 3 is a second flowchart of a cell reselection method according to an embodiment of this application;
FIG 4 is a third flowchart of a cell reselection method according to an embodiment of this application;
FIG 5 is a fourth flowchart of a cell reselection method according to an embodiment of this application;
FIG 6 is a first schematic diagram of a structure of a cell reselection apparatus according to an embodiment of this application;
FIG 7 is a second schematic diagram of a structure of a cell reselection apparatus according to an embodiment of this application;
FIG 8 is a schematic diagram of a structure of a terminal according to an embodiment of this application; and
FIG 9 is a schematic diagram of a hardware structure of a terminal according to an embodiment of this application.

### DESCRIPTION OF EMBODIMENTS

The following clearly describes technical solutions in embodiments of this application with reference to the accompanying drawings in the embodiments of this application. Clearly, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a long term evolution (Long Term Evolution, LTE)/LTE-advanced (LTE-Advanced, LTE-A) system, and can also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communication system.

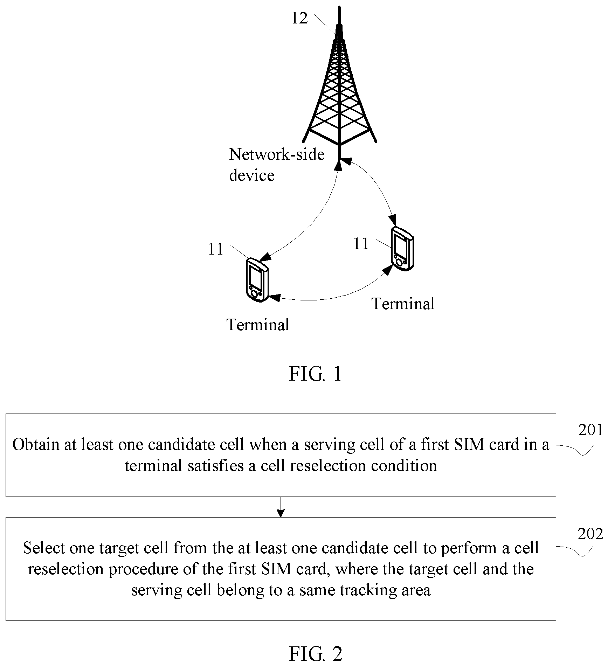

FIG 1 is a structural diagram of a wireless communication system to which embodiments of this application can be applied. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), or a terminal-side device, for example, smart household (household devices having a wireless communication function such as a refrigerator, a television, a washing machine, or furniture). The wearable device includes a smart watch, a smart band, a smart headset, smart glasses, smart accessories (a smart bangle, a smart bracelet, a smart ring, a smart necklace, a smart ankle bracelet, a smart anklet, and the like), a smart wrist strap, smart clothes, a game console, and the like. It should be noted that a specific type of the terminal 11 is not limited in the embodiments of this application. The network-side device 12 may be of a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmission and Reception Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

The following describes in detail the cell reselection method provided in the embodiments of this application through specific embodiments and application scenarios thereof with reference to the accompanying drawings.

An embodiment of this application provides a cell reselection method. The method includes: obtaining at least one candidate cell when a serving cell of a first SIM card in a terminal satisfies a cell reselection condition; and selecting one target cell from the at least one candidate cell to perform a cell reselection procedure of the first SIM card, where the target cell and the serving cell belong to a same tracking area. The cell reselection method in this embodiment of this application is applicable to at least the following application scenario.

For a terminal with a primary card and at least one secondary card, for example, for a terminal that is a dual-SIM single-pass mobile phone, the primary card is denoted as, for example, a second SIM card, and the secondary card is denoted as, for example, a first SIM card. During a data service based on a data connection provided by a specific application on the mobile phone by using the primary card, after the secondary card completes cell reselection, if the secondary card needs to exit an idle mode and enter a connected mode for a location update, the secondary card preempts radio frequency resources, causing lags during the data service of the primary card and affecting normal usage of the data service of the primary card. For the application scenario, in this embodiment of this application, when the serving cell of the first SIM card satisfies the cell reselection condition and there is a candidate cell, a candidate cell that belongs to the same tracking area as the serving cell is selected to be the target cell. As the target cell and the serving cell belong to the same tracking area, after the first SIM card reselects and resides the target cell, a location update procedure is not triggered, to prevent the first SIM card from exiting an idle mode, entering a connected mode, and preempting radio frequency resources of the terminal.

FIG 2 is a first flowchart of a cell reselection method according to an embodiment of this application. As shown in FIG 2, the method includes the following steps.

Step 201: Obtain at least one candidate cell when a serving cell of a first SIM card in a terminal satisfies a cell reselection condition.

Optionally, the terminal may be a multi-SIM single-standby mobile phone, and the terminal includes a primary card and at least one secondary card. In this embodiment of this application, a second SIM card may represent the primary card in the terminal, and the first SIM card may represent any secondary card in the terminal. Alternatively, a second SIM card may represent any secondary card in the terminal, and the first SIM card may represent the primary card in the terminal.

Optionally, when the serving cell of the first SIM card in the terminal satisfies the cell reselection condition, the terminal performs a procedure for searching for a candidate cell of the first SIM card, and obtains the at least one candidate cell of the first SIM card. When the terminal finds a plurality of candidate cells that satisfy the cell reselection condition, the candidate cells may be cells on different frequencies, and the frequencies have different priorities. The frequencies of the candidate cells may further be a part of frequencies supported by the terminal. Alternatively, the candidate cells may be a part of cells, for example, merely cells with greatest signal strength, on a same frequency.

Step 202: Select one target cell from the at least one candidate cell to perform a cell reselection procedure of the first SIM card, where the target cell and the serving cell belong to a same tracking area.

Optionally, a tracking area in this embodiment of this application indicates a location range of UE. A network-side device may obtain a location of the terminal in time based on a tracking area. When the terminal moves within a same tracking area, a location update is not needed. The tracking area in this embodiment of this application may be, for example, a location area (Location Area, LA) in a 2G/3G system, may be a tracking area (Tracking Area, TA) in an LTE/LTE-A system, or may be a mobility registration update (Mobility Registration Update, MRU) in a 5G system.

Optionally, when the serving cell of the secondary card in the terminal satisfies the cell reselection condition and the at least one candidate cell is found, a reselected cell is selected from the candidate cell to be the target cell. The target cell needs to belong to the same tracking area as the serving cell. When the target cell and the serving cell belong to the same tracking area, after the secondary card in the terminal reselects and resides the target cell, a location update procedure of the secondary card is not triggered.

According to the cell reselection method provided in this embodiment of this application, when the serving cell of the first SIM card in the terminal satisfies the cell reselection condition and there is the at least one candidate cell, a candidate cell that belongs to the same tracking area as the serving cell is selected from the candidate cell to be the target cell. As the target cell and the serving cell belong to the same tracking area, after the first SIM card reselects and resides the target cell, a location update procedure is not triggered, to prevent the first SIM card from exiting an idle mode, entering a connected mode, and preempting radio frequency resources of the terminal.

Optionally, an implementation of step 202 may include: determining that a candidate cell, in the at least one candidate cell, that belongs to the same tracking area as the serving cell and that satisfies a target condition is the target cell, and performing the cell reselection procedure of the first SIM card based on the target cell.

Specifically, the target condition may include that the candidate cell is a candidate cell with highest signal quality, or that the candidate cell is the first candidate cell determined as belonging to the same tracking area as the serving cell. Examples are used for description below.

For example, the target condition is that the candidate cell is a candidate cell with highest signal quality. A process of determining the target cell is specifically as follows: Whether each candidate cell belongs to the same tracking area as the serving cell is determined, and the candidate cell with the highest signal quality in all candidate cells that belong to the same tracking area as the serving cell is used as the target cell.

Specifically, when the terminal finds a plurality of candidate cells that satisfy the cell reselection condition, a tracking area of each candidate cell is compared with the tracking area of the serving cell, and all candidate cells that belong to the same tracking area as the serving cell are selected. Then, based on a parameter of signal quality, the candidate cell with the highest signal quality in all the selected candidate cells that belong to the same tracking area as the serving cell is used as the target cell, to ensure that a reselected cell has the highest signal quality.

For example, the target condition is that the candidate cell is the first candidate cell determined as belonging to the same tracking area as the serving cell. A process of determining the target cell is specifically as follows: Whether each candidate cell belongs to the same tracking area as the serving cell is determined, and the first candidate cell determined as belonging to the same tracking area as the serving cell used is the target cell.

Specifically, when the terminal finds a plurality of candidate cells that satisfy the cell reselection condition, a tracking area of each candidate cell is compared with the tracking area of the serving cell, and the first candidate cell determined as belonging to the same tracking area as the serving cell is used as the target cell, to reduce a processing delay.

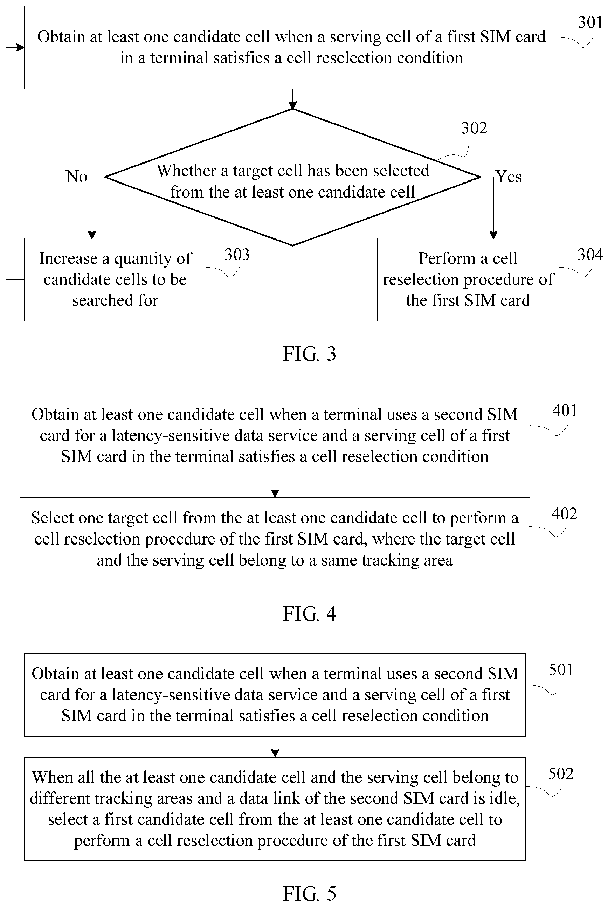

FIG 3 is a second flowchart of a cell reselection method according to an embodiment of this application. As shown in FIG 3, the method includes the following steps.

Step 301: Obtain at least one candidate cell when a serving cell of a first SIM card in a terminal satisfies a cell reselection condition.

Step 302: Determine whether a target cell is selected from the at least one candidate cell; and if the target cell has been selected from the at least one candidate cell, turn to step 304; or if the target cell has not been selected from the at least one candidate cell, turn to step 303, where the target cell and the serving cell belong to a same tracking area.

Step 303: Increase a quantity of candidate cells to be searched for, and turn to step 301.

Optionally, when all the at least one candidate cell and the serving cell belong to different tracking areas, the quantity of candidate cells to be searched for is increased.

Step 304: Perform a cell reselection procedure of the first SIM card.

Optionally, when a serving cell of a secondary card in the terminal satisfies the cell reselection condition and the at least one candidate cell is found, a reselected cell is selected from the at least one candidate cell to be the target cell. The target cell needs to satisfy the following condition: The target cell and the serving cell belong to the same tracking area. However, when none of the at least one candidate cell that has been found belongs to the same tracking area as the serving cell, the quantity of candidate cells to be searched for is increased according to the method in step 303, to ensure that the target cell can be found.

Optionally, when none of the at least one candidate cell belongs to the same tracking area as the serving cell, any of the following manners or a combination thereof may be used to increase the quantity of candidate cells to be searched for.

Manner a: When all the at least one candidate cell and the serving cell belong to different tracking areas and a frequency corresponding to the at least one candidate cell is a part of frequencies supported by the terminal, the terminal continues to search for an unassessed frequency, to increase the quantity of candidate cells.

Optionally, when a frequency corresponding to a candidate cell that has been found is not all frequencies supported by the terminal but only a part of frequencies supported by the terminal, a frequency that is supported by the terminal and that is unassessed may be added as a frequency to be searched for. The terminal continues to search for an unassessed frequency to be searched for, to increase the quantity of candidate cells.

Manner b: When all the at least one candidate cell and the serving cell belong to different tracking areas and the at least one candidate cell is a part of cells on a frequency corresponding to the at least one candidate cell, the terminal continues to assess an unassessed cell, to increase the quantity of candidate cells.

Optionally, when a candidate cell that has been found is not all cells that are on a frequency corresponding to the candidate cell and that satisfy the cell reselection condition but only a part of cells that are on the corresponding frequency and that satisfy the cell reselection condition, an unassessed cell that is on the corresponding frequency and that satisfies the cell reselection condition may be added as a candidate cell. The terminal continues to search for an unassessed candidate cell, to increase the quantity of candidate cells.

Manner c: When all the at least one candidate cell and the serving cell belong to different tracking areas, the terminal adjusts a reselection threshold, to increase the quantity of candidate cells.

Optionally, when a candidate cell that has been found does not include the target cell, the terminal may adjust the reselection threshold to increase the quantity of candidate cells, for example, may reduce a signal strength threshold and/or signal quality threshold, in the cell reselection condition, specific to an unassessed cell.

According to the cell reselection method provided in this embodiment of this application, when the serving cell of the first SIM card in the terminal satisfies the cell reselection condition and there is the candidate cell, the target cell that belongs to the same tracking area as the serving cell is selected from the candidate cell to be the reselected cell. If no candidate cell that has been found belongs to the same tracking area as the serving cell, the quantity of candidate cells to be searched for is increased, to increase a probability of finding the target cell, preventing the first SIM card from triggering a location update procedure after reselecting and residing the target cell.

FIG 4 is a third flowchart of a cell reselection method according to an embodiment of this application. As shown in FIG 4, the method includes the following steps.

Step 401: Obtain at least one candidate cell when a terminal uses a second SIM card for a latency-sensitive data service and a serving cell of a first SIM card in the terminal satisfies a cell reselection condition.

Optionally, when the terminal uses the second SIM card (for example, a primary card) for the latency-sensitive data service and the serving cell of the first SIM card (for example, a secondary card) satisfies the cell reselection condition, the terminal performs a procedure for searching for a candidate cell of the first SIM card, and obtains the at least one candidate cell of the first SIM card.

Step 402: Select one target cell from the at least one candidate cell to perform a cell reselection procedure of the first SIM card, where the target cell and the serving cell belong to a same tracking area.

Optionally, for descriptions and explanation of step 402, refer to step 202, and same technical effect can be achieved. To avoid repetition, details are not described herein again.

If the terminal uses mobile data of the primary card for the latency-sensitive data service and the serving cell of the secondary card in the terminal satisfies the cell reselection condition, when the terminal selects the target cell from the obtained at least one candidate cell, preventing to trigger a location update procedure needs to be used as a selection condition. To be specific, when there are a plurality of candidate cells that satisfy a selection criterion for cell reselection, the terminal preferentially selects a candidate cell that does not trigger, after the cell reselection, the secondary card to enter a connected mode for a location update to be the target cell, without using signal strength, signal quality, or a priority of a frequency as an only consideration, to prevent the secondary card from exiting an idle mode, entering the connected mode, and preempting radio frequency resources of the terminal.

According to the cell reselection method provided in this embodiment of this application, when the serving cell of the secondary card in the terminal satisfies the cell reselection condition and there is the candidate cell, the target cell that belongs to the same tracking area as the serving cell is selected from the candidate cell to be a reselected cell. As the target cell and the serving cell belong to the same tracking area, after the secondary card reselects and resides the target cell, a location update procedure is not triggered, to prevent the secondary card from exiting an idle mode, entering a connected mode, and preempting radio frequency resources of the terminal. This ensures normal usage of a data service of the primary card.

FIG 5 is a fourth flowchart of a cell reselection method according to an embodiment of this application. As shown in FIG 5, the method includes the following steps.

Step 501: Obtain at least one candidate cell when a terminal uses a second SIM card for a latency-sensitive data service and a serving cell of a first SIM card in the terminal satisfies a cell reselection condition.

Optionally, for descriptions and explanation of step 501, refer to step 401, and same technical effect can be achieved. To avoid repetition, details are not described herein again.

Step 502: When all the at least one candidate cell and the serving cell belong to different tracking areas and a data link of the second SIM card is idle, select a first candidate cell from the at least one candidate cell to perform a cell reselection procedure of the first SIM card.

Optionally, when there is an interval between data services of a primary card, even if a secondary card exits an idle mode, enters a connected mode, and preempts radio frequency resources of the terminal, the data services of the primary card are not affected. In this scenario, the terminal may directly select any candidate cell from the candidate cell to be a reselected cell of the secondary card, to complete the cell reselection procedure.

According to the cell reselection method provided in this embodiment of this application, when there is an interval between data services of the primary card, the first candidate cell is selected from the at least one candidate cell to perform the cell reselection procedure of the first SIM card, to ensure that an incoming call (or data sent by a network-side device) is not missed and the secondary card can receive paging normally.

It should be noted that the cell reselection method provided in the embodiments of this application may be performed by a cell reselection apparatus or a control module for performing the cell reselection method in the cell reselection apparatus. In the embodiments of this application, the cell reselection apparatus provided in an embodiment of this application is described by using an example in which the cell reselection method is performed by the cell reselection apparatus.

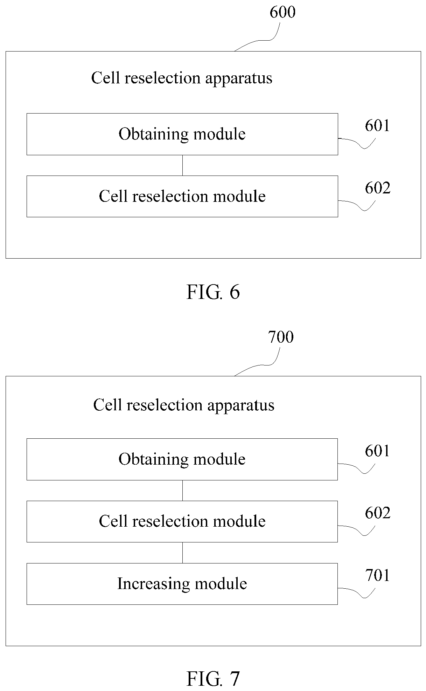

An embodiment of this application provides a cell reselection apparatus. FIG 6 is a first schematic diagram of a structure of the cell reselection apparatus according to this embodiment of this application. As shown in FIG 6, a cell reselection apparatus 600 includes an obtaining module 601 and a cell reselection module 602.

The obtaining module 601 is configured to obtain at least one candidate cell when a serving cell of a first SIM card in a terminal satisfies a cell reselection condition.

The cell reselection module 602 is configured to select one target cell from the at least one candidate cell to perform a cell reselection procedure of the first SIM card, where the target cell and the serving cell belong to a same tracking area.

According to the cell reselection apparatus provided in this embodiment of this application, when the serving cell of the first SIM card in the terminal satisfies the cell reselection condition and there is the at least one candidate cell, a candidate cell that belongs to the same tracking area as the serving cell is selected from the candidate cell to be the target cell. As the target cell and the serving cell belong to the same tracking area, after the first SIM card reselects and resides the target cell, a location update procedure is not triggered, to prevent the first SIM card from exiting an idle mode, entering a connected mode, and preempting radio frequency resources of the terminal.

Optionally, the cell reselection module 602 is specifically configured to: determine that a candidate cell, in the at least one candidate cell, that belongs to the same tracking area as the serving cell and that satisfies a target condition is the target cell, and perform the cell reselection procedure of the first SIM card based on the target cell.

Optionally, FIG 7 is a second schematic diagram of a structure of the cell reselection apparatus according to an embodiment of this application. As shown in FIG 7, a cell reselection apparatus 700 includes an obtaining module 601, a cell reselection module 602, and an increasing module 701.

The increasing module 701 is configured to: when all at least one candidate cell and a serving cell belong to different tracking areas, increase a quantity of candidate cells to be searched for.

Optionally, the increasing module is specifically configured to:
when all the at least one candidate cell and the serving cell belong to different tracking areas and a frequency corresponding to the at least one candidate cell is a part of frequencies supported by the terminal, continue, by the terminal, to search for an unassessed frequency, to increase the quantity of candidate cells;
when all the at least one candidate cell and the serving cell belong to different tracking areas and the at least one candidate cell is a part of cells on a frequency corresponding to the at least one candidate cell, continue, by the terminal, to assess an unassessed cell, to increase the quantity of candidate cells; or
when all the at least one candidate cell and the serving cell belong to different tracking areas, adjust, by the terminal, a reselection threshold, to increase the quantity of candidate cells.

Optionally, the obtaining module 601 is specifically configured to obtain the at least one candidate cell when the terminal uses a second SIM card for a latency-sensitive data service and a serving cell of a first SIM card in the terminal satisfies a cell reselection condition.

Optionally, the cell reselection module 602 is specifically configured to: when all the at least one candidate cell and the serving cell belong to different tracking areas and a data link of the second SIM card is idle, select a first candidate cell from the at least one candidate cell to perform a cell reselection procedure of the first SIM card.

The cell reselection apparatus in the embodiments of this application may be an apparatus or an apparatus or terminal with an operating system, or may be a component, an integrated circuit, or a chip in a terminal. The apparatus may be a mobile terminal, or a non-mobile terminal. For example, the mobile terminal may include but is not limited to the foregoing listed types of the terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The cell reselection apparatus in the embodiments of this application may be an apparatus with an operating system. The operating system may be an Android (Android) operating system, an iOS operating system, or another possible operating system. This is not specifically limited in the embodiments of this application.

The cell reselection apparatus provided in the embodiments of this application can implement the processes implemented in the method embodiments in FIG 1 to FIG 5. To avoid repetition, details are not described herein again.

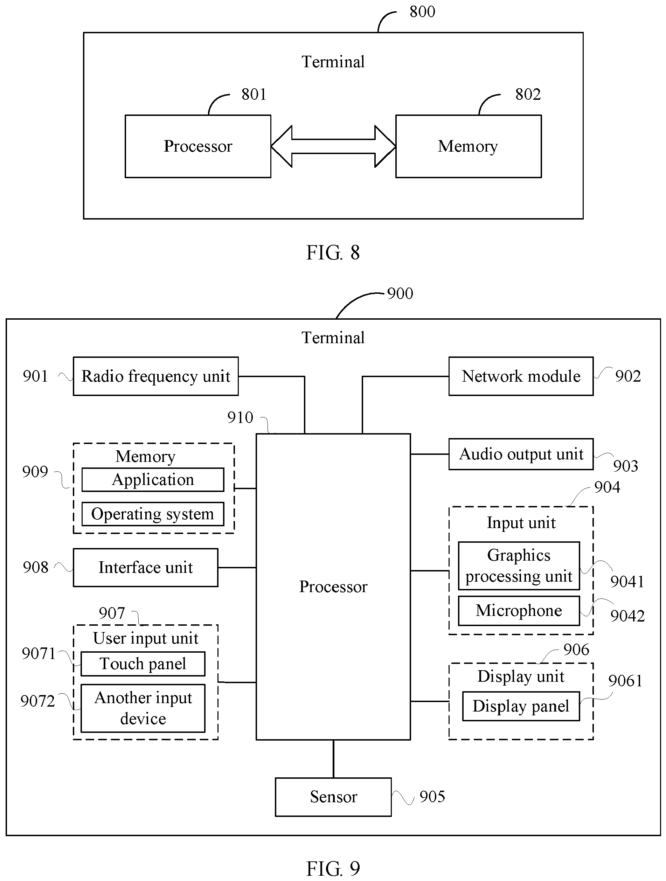

Optionally, as shown in FIG 8, an embodiment of this application further provides a terminal 800, including a processor 801, a memory 802, and a program or an instruction that is stored in the memory 802 and that can be run on the processor 801. When the program or the instruction is executed by the processor 801, the processes in the foregoing cell reselection method embodiment are implemented, and same technical effect can be achieved. To avoid repetition, details are not described herein again.

It should be noted that the terminal in this embodiment of this application includes the foregoing mobile terminal and non-mobile terminal.

FIG 9 is a schematic diagram of a hardware structure of a terminal according to an embodiment of this application. As shown in FIG 9, a terminal 900 includes but is not limited to at least a part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the terminal 900 may further include a power supply (for example, a battery) that supplies power to each component. The power supply may be logically connected to the processor 910 by using a power supply management system, to implement functions such as charging and discharging management, and power consumption management by using the power supply management system. The terminal structure shown in FIG 9 constitutes no limitation on the terminal, and the terminal may include more or fewer components than those shown in the figure, or combine some components, or have different component arrangements. Details are not described herein.

It should be understood that, in this embodiment of this application, the input unit 904 may include a graphics processing unit (Graphics Processing Unit, GPU) 9041 and a microphone 9042. The graphics processing unit 9041 processes image data of a still picture or a video obtained by an image capture apparatus (for example, a camera) in a video capture mode or an image capture mode. The display unit 906 may include a display panel 9061. Optionally, the display panel 9061 may be configured in a form of, for example, a liquid crystal display or an organic light-emitting diode. The user input unit 907 includes a touch panel 9071 and another input device 9072. The touch panel 9071 is also referred to as a touch screen. The touch panel 9071 may include two parts: a touch detection apparatus and a touch controller. The another input device 9072 may include but is not limited to a physical keyboard, a functional button (for example, a volume control button or a power on/off button), a trackball, a mouse, and a joystick. Details are not described herein. The memory 909 may be configured to store a software program and various types of data, including but not limited to an application and an operating system. An application processor and a modem processor may be integrated into the processor 910. The application processor mainly processes an operating system, a user interface, an application, and the like, and the modem processor mainly processes wireless communication. It can be understood that, the modem processor may alternatively not be integrated into the processor 910.

The network module 902 is configured to obtain at least one candidate cell when a serving cell of a first SIM card in a terminal satisfies a cell reselection condition.

The network module 902 is further configured to select one target cell from the at least one candidate cell to perform a cell reselection procedure of the first SIM card, where the target cell and the serving cell belong to a same tracking area.

According to the terminal provided in this embodiment of this application, when the serving cell of the first SIM card in the terminal satisfies the cell reselection condition and there is the at least one candidate cell, a candidate cell that belongs to the same tracking area as the serving cell is selected from the candidate cell to be the target cell. As the target cell and the serving cell belong to the same tracking area, after the first SIM card reselects and resides the target cell, a location update procedure is not triggered, to prevent the first SIM card from exiting an idle mode, entering a connected mode, and preempting radio frequency resources of the terminal.

Optionally, the processor 910 is configured to: determine that a candidate cell, in the at least one candidate cell, that belongs to the same tracking area as the serving cell and that satisfies a target condition is the target cell, and perform the cell reselection procedure of the first SIM card based on the target cell.

According to the terminal provided in this embodiment of this application, when the terminal finds a plurality of candidate cells that satisfy the cell reselection condition, a tracking area of each candidate cell is compared with the tracking area of the serving cell, and all candidate cells that belong to the same tracking area as the serving cell are selected. Then, based on a parameter of signal quality, the candidate cell with the highest signal quality in all the selected candidate cells that belong to the same tracking area as the serving cell is used as the target cell, to ensure that a reselected cell has the highest signal quality; and when the terminal finds the plurality of candidate cells that satisfy the cell reselection condition, the tracking area of each candidate cell is compared with the tracking area of the serving cell, and the first candidate cell determined as belonging to the same tracking area as the serving cell is used as the target cell, to reduce a processing delay.

Optionally, the network module 902 is further configured to: when all the at least one candidate cell and the serving cell belong to different tracking areas, increase a quantity of candidate cells to be searched for.

According to the terminal provided in this embodiment of this application, when a serving cell of a secondary card in the terminal satisfies the cell reselection condition and there is the candidate cell, the target cell that belongs to the same tracking area as the serving cell is selected from the candidate cell to be the reselected cell. If no candidate cell that has been found belongs to the same tracking area as the serving cell, the quantity of candidate cells to be searched for is increased, to ensure that the target cell can be found, preventing the secondary card in the terminal from triggering a location update procedure after reselecting and residing the target cell.

Optionally, the network module 902 is configured to:
when all the at least one candidate cell and the serving cell belong to different tracking areas and a frequency corresponding to the at least one candidate cell is a part of frequencies supported by the terminal, continue, by the terminal, to search for an unassessed frequency, to increase the quantity of candidate cells;
when all the at least one candidate cell and the serving cell belong to different tracking areas and the at least one candidate cell is a part of cells on a frequency corresponding to the at least one candidate cell, continue, by the terminal, to assess an unassessed cell, to increase the quantity of candidate cells; or
when all the at least one candidate cell and the serving cell belong to different tracking areas, adjust, by the terminal, a reselection threshold, to increase the quantity of candidate cells.

According to the terminal provided in this embodiment of this application, a probability of finding the target cell is increased by providing an implementation of increasing the quantity of candidate cells to be searched for, to prevent the secondary card in the terminal from triggering the location update procedure after reselecting and residing the target cell.

Optionally, the network module 902 is configured to obtain the at least one candidate cell when the terminal uses a second SIM card for a latency-sensitive data service and the serving cell of the first SIM card in the terminal satisfies the cell reselection condition.

According to the terminal provided in this embodiment of this application, when the serving cell of the secondary card in the terminal satisfies the cell reselection condition and there is the candidate cell, the target cell that belongs to the same tracking area as the serving cell is selected from the candidate cell to be a reselected cell. As the target cell and the serving cell belong to the same tracking area, after the secondary card reselects and resides the target cell, the location update procedure is not triggered, to prevent the secondary card from exiting the idle mode, entering the connected mode, and preempting the radio frequency resources of the terminal. This ensures normal usage of a data service of a primary card.

Optionally, the network module 902 is configured to: when all the at least one candidate cell and the serving cell belong to different tracking areas and a data link of the second SIM card is idle, select a first candidate cell from the at least one candidate cell to perform the cell reselection procedure of the first SIM card.

According to the terminal provided in this embodiment of this application, when there is an interval between data services of the primary card, the first candidate cell is selected from the at least one candidate cell to perform the cell reselection procedure of the first SIM card, to ensure that an incoming call (or data sent by a network-side device) is not missed and the secondary card can receive paging normally.

An embodiment of this application further provides a readable storage medium. The readable storage medium stores a program or an instruction. When the program or the instruction is executed by a processor, the processes in the foregoing cell reselection method embodiment are implemented, and same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor, and the processor is configured to run a program or an instruction to implement the processes in the foregoing cell reselection method embodiment, and same technical effect can be achieved. To avoid repetition, details are not described herein again.

It should be understood that the chip mentioned in this embodiment of this application may also be referred to as a system-level chip, a system on chip, a chip system, or an on-chip system chip.

An embodiment of this application further provides a computer program product. The computer program product includes a computer program. When the computer program is executed by a processor, the processes in the foregoing cell reselection method embodiment are implemented, and same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed order, and may further include performing functions in a roughly simultaneous manner or in a reverse order according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the specific implementations described above, and the specific implementations described above are only illustrative and not restrictive. With the enlightenment of this application, a person of ordinary skill in the art can make many forms without departing from the purpose of this application and the protection scope of the claims, all of which fall within the protection of this application.

## Claims

1. A cell reselection method, comprising:
obtaining at least one candidate cell when a serving cell of a first subscriber identification module SIM card in a terminal satisfies a cell reselection condition; and
selecting one target cell from the at least one candidate cell to perform a cell reselection procedure of the first SIM card, wherein
the target cell and the serving cell belong to a same tracking area.

2. The cell reselection method according to claim 1, wherein the selecting one target cell from the at least one candidate cell to perform a cell reselection procedure of the first SIM card comprises:
determining that a candidate cell, in the at least one candidate cell, that belongs to the same tracking area as the serving cell and that satisfies a target condition is the target cell, and performing the cell reselection procedure of the first SIM card based on the target cell.

3. The cell reselection method according to claim 1 or 2, wherein the method further comprises:
when all the at least one candidate cell and the serving cell belong to different tracking areas, increasing a quantity of candidate cells to be searched for.

4. The cell reselection method according to claim 3, wherein the when all the at least one candidate cell and the serving cell belong to different tracking areas, increasing a quantity of candidate cells to be searched for comprises:
when all the at least one candidate cell and the serving cell belong to different tracking areas and a frequency corresponding to the at least one candidate cell is a part of frequencies supported by the terminal, continuing, by the terminal, to search for an unassessed frequency, to increase the quantity of candidate cells;
when all the at least one candidate cell and the serving cell belong to different tracking areas and the at least one candidate cell is a part of cells on a frequency corresponding to the at least one candidate cell, continuing, by the terminal, to assess an unassessed cell, to increase the quantity of candidate cells; or
when all the at least one candidate cell and the serving cell belong to different tracking areas, adjusting, by the terminal, a reselection threshold, to increase the quantity of candidate cells.

5. The cell reselection method according to claim 1 or 2, wherein the obtaining at least one candidate cell when a serving cell of a first SIM card in a terminal satisfies a cell reselection condition comprises:
obtaining the at least one candidate cell when the terminal uses a second SIM card for a latency-sensitive data service and the serving cell of the first SIM card in the terminal satisfies the cell reselection condition.

6. The cell reselection method according to claim 5, wherein the selecting one target cell from the at least one candidate cell to perform a cell reselection procedure of the first SIM card comprises:
when all the at least one candidate cell and the serving cell belong to different tracking areas and a data link of the second SIM card is idle, selecting a first candidate cell from the at least one candidate cell to perform the cell reselection procedure of the first SIM card.

7. A cell reselection apparatus, comprising:
an obtaining module, configured to obtain at least one candidate cell when a serving cell of a first subscriber identification module SIM card in a terminal satisfies a cell reselection condition; and
a cell reselection module, configured to select one target cell from the at least one candidate cell to perform a cell reselection procedure of the first SIM card, wherein
the target cell and the serving cell belong to a same tracking area.

8. The cell reselection apparatus according to claim 7, wherein the cell reselection module is specifically configured to:
determine that a candidate cell, in the at least one candidate cell, that belongs to the same tracking area as the serving cell and that satisfies a target condition is the target cell, and perform the cell reselection procedure of the first SIM card based on the target cell.

9. The cell reselection apparatus according to claim 7 or 8, wherein the apparatus further comprises:
an increasing module, configured to: when all the at least one candidate cell and the serving cell belong to different tracking areas, increase a quantity of candidate cells to be searched for.

10. The cell reselection apparatus according to claim 9, wherein the increasing module is specifically configured to:
when all the at least one candidate cell and the serving cell belong to different tracking areas and a frequency corresponding to the at least one candidate cell is a part of frequencies supported by the terminal, continue, by the terminal, to search for an unassessed frequency, to increase the quantity of candidate cells;
when all the at least one candidate cell and the serving cell belong to different tracking areas and the at least one candidate cell is a part of cells on a frequency corresponding to the at least one candidate cell, continue, by the terminal, to assess an unassessed cell, to increase the quantity of candidate cells; or
when all the at least one candidate cell and the serving cell belong to different tracking areas, adjust, by the terminal, a reselection threshold, to increase the quantity of candidate cells.

11. The cell reselection apparatus according to claim 7 or 8, wherein the obtaining module is specifically configured to:
obtain the at least one candidate cell when the terminal uses a second SIM card for a latency-sensitive data service and the serving cell of the first SIM card in the terminal satisfies the cell reselection condition.

12. The cell reselection apparatus according to claim 11, wherein the cell reselection module is specifically configured to:
when all the at least one candidate cell and the serving cell belong to different tracking areas and a data link of the second SIM card is idle, select a first candidate cell from the at least one candidate cell to perform the cell reselection procedure of the first SIM card.

13. A terminal, comprising a processor, a memory, and a processor-executable program or instruction stored in the memory, wherein when the program or the instruction is executed by the processor, steps of the cell reselection method according to any one of claims 1 to 6 are implemented.

14. A readable storage medium, wherein the readable storage medium stores a program or an instruction, and when the program or the instruction is executed by a processor, steps of the cell reselection method according to any one of claims 1 to 6 are implemented.

15. A chip, wherein the chip comprises a processor and a communication interface, the communication interface is coupled to the processor, and the processor is configured to run a program or an instruction, to implement steps of the cell reselection method according to any one of claims 1 to 6.

16. A computer program product, comprising a computer program, wherein the computer program is stored in a non-transitory storage medium, and the computer program is executed by at least one processor to implement steps of the cell reselection method according to any one of claims 1 to 6.
